# EUROPEAN PATENT APPLICATION

(11) **EP 4 524 746 A1**
(43) Date of publication of application: **19.03.2025**
(21) Application number: 23856185.6
(22) Date of filing: 06.06.2023
(51) Int. Cl.: G06F 11/07

(54) **MEMORY FAULT PROCESSING METHOD AND RELATED DEVICE THEREOF**

(30) Priority: 25.08.2022 CN 202211025578
(71) Applicant: xFusion Digital Technologies Co., Ltd., Zhengzhou, Henan 450000 (CN)
(72) Inventor: ZHANG, Fei, Zhengzhou, Henan 450000 (CN)
(74) Representative: MERH-IP Matias Erny Reichl Hoffmann Patentanwälte PartG mbB
(86) International application number: PCT/CN2023/098702
(87) International publication number: WO 2024/041093

(57) **Abstract**

This application discloses a method for processing a memory fault and a related device, which are applied to the storage field. The method includes: obtaining uncorrectable error information of a first memory, where the uncorrectable error information includes a fault address; and then, obtaining first target data corresponding to the fault address from a second memory, and writing the first target data into the fault address in the first memory, where the first memory and the second memory are mutual mirrored memories; checking second target data at the fault address in the first memory, where the second target data is data at the fault address in the first memory after the first target data is written into the fault address in the first memory; and if the second target data is checked as fault data, marking the fault address in the first memory as a to-be-offlined address, and performing a soft page offline operation on the to-be-offlined address. **In** this application, the soft page offline operation is performed on the fault address, so that it can be ensured that another memory space in the first memory is normally used, and a memory mirroring mode does not need to be released.

## Description

This application claims priority to Chinese Patent Application No. 202211025578.3, filed with the China National Intellectual Property Administration on August 25, 2022 and entitled "METHOD FOR PROCESSING MEMORY FAULT AND RELATED DEVICE", which is incorporated herein by reference in its entirety.

### TECHNICAL FIELD

Embodiments of this application relate to the storage field, and in particular, to a method for processing a memory fault and a related device.

### BACKGROUND

Most current computing devices use a memory mirroring mode in which memory spaces of two independent physical memory channels are set to mutual backups. The two memory spaces have a same address space, and store same data at a same address. One of the memory channels is set to a primary channel, and the other memory channel is set to a backup channel. In this way, it is ensured that correct data can still be obtained from a memory device of the backup channel when a memory of the primary channel fails, to ensure normal running of the computing device.

After the computing device enables the memory mirroring mode, if a memory controller detects, in a running process, that an uncorrectable error (uncorrectable error, UCE) fault of memory data occurs on the primary channel, the memory controller reads data from a same address in a memory space corresponding to the backup channel, and repairs data at a faulty memory address in a memory space corresponding to the primary channel. However, when the data cannot be repaired, it is considered that the UCE fault is a UCE of a hard memory failure type, and in this case, the memory controller releases a mirror relationship between the memory space corresponding to the primary channel and the memory space corresponding to the backup channel, and uses only the memory space corresponding to the backup channel.

However, if the mirror relationship between the memory space corresponding to the primary channel and the memory space corresponding to the backup channel is released, the memory space corresponding to the entire primary channel except the faulty memory address is unavailable.

### SUMMARY

Embodiments of this application provide a method for processing a memory fault and a related device, which are applied to the storage field. In the method for processing a memory fault, an exact location of the memory fault can be accurately located, and a memory mirroring mode does not need to be released.

According to a first aspect, a method for processing a memory fault is provided, and includes:
obtaining uncorrectable error information of a first memory, where the uncorrectable error information includes a fault address;
obtaining first target data corresponding to the fault address from a second memory, and writing the first target data into the fault address in the first memory, where the first memory and the second memory are mutual mirrored memories;
checking second target data at the fault address in the first memory, and if the second target data is checked as fault data, marking the fault address in the first memory as a to-be-offlined address; and
performing a soft page offline operation on the to-be-offlined address.

In this implementation of this application, a fault address of a UCE fault of a hard failure type is marked as the to-be-offlined address, and the soft page offline operation is performed on the to-be-offlined address. In this way, the fault address is accurately offlined, another memory address is not affected, and further, a mirror relationship between the first memory and the second memory does not need to be released, so that another memory space in the first memory except the fault address can still normally support read and write, thereby avoiding a case in which a normal memory space in the first memory cannot be used after the mirror relationship is released, improving a probability of using the first memory, narrowing an adverse impact range of a UCE of a hard memory failure type, avoiding a waste of memory resources, and significantly reducing a probability of releasing a memory mirroring mode.

In a possible implementation of the first aspect, the fault address in the first memory is marked as the to-be-offlined address based on a "to-be-offlined" identification.

In this implementation of this application, the fault address in the first memory is marked as the to-be-offlined address by the "to-be-offlined" identification in a plurality of manners, and this reflects diversity and selectivity of a solution.

In a possible implementation of the first aspect, the soft page offline operation is performed on the to-be-offlined address by using an operating system (operating system, OS).

In this implementation of this application, a computing device performs the soft page offline operation on the to-be-offlined address by using the OS. This reflects a specific implementation of the solution, another normal memory space of the first memory is not affected, and the mirror relationship between the first memory and the second memory does not need to be released.

In a possible implementation of the first aspect, a generic hardware error source (generic hardware error source, GHES) table is generated, and the GHES table includes the fault address and the corresponding "to-be-offlined" identification.

In this implementation of this application, the GHES table includes the fault address and the corresponding "to-be-offlined" identification, so that the corresponding fault address can be determined, as the to-be-offlined address, from the GHES table based on the "to-be-offlined" identification. This reflects a specific implementation of the solution, and reflects reliability of the solution.

In a possible implementation of the first aspect, a fault level of the fault address in the GHES table is correctable.

In this implementation of this application, this reflects that a fault occurring at the fault address does not adversely affect running of the computing device.

In a possible implementation of the first aspect, the soft page offline operation is performed, by using the OS, on the fault address that is corresponding to the "to-be-offlined" identification and whose fault level is correctable in the GHES table.

In this implementation of this application, a specific implementation of the solution is reflected, and reliability of the solution is reflected.

According to a second aspect, a computing device is provided. The computing device includes a processor, a first memory, a second memory, and a memory controller, the first memory and the second memory are connected to the memory controller, the memory controller is connected to the processor, and the first memory and the second memory are mutual mirrored memories.

The memory controller is configured to obtain uncorrectable error information of the first memory, and the uncorrectable error information includes a fault address.

The memory controller is further configured to: obtain first target data corresponding to the fault address from the second memory, and write the first target data into the fault address in the first memory.

The memory controller is further configured to check second target data at the fault address in the first memory.

The processor is configured to mark the fault address in the first memory as a to-be-offlined address if the second target data is checked as fault data.

The processor is further configured to perform a soft page offline operation on the to-be-offlined address.

In this implementation of this application, the processor is specifically configured to mark the fault address in the first memory as the to-be-offlined address based on a "to-be-offlined" identification.

In a possible implementation of the second aspect, the processor generates a GHES table, and the GHES table includes the fault address and the corresponding "to-be-offlined" identification.

In a possible implementation of the second aspect, a fault level of the fault address in the GHES table is correctable.

In a possible implementation of the second aspect, the processor is specifically configured to perform, by using an OS, the soft page offline operation on the fault address that is corresponding to the "to-be-offlined" identification and whose fault level is correctable in the GHES table.

For beneficial effects of the second aspect, refer to the first aspect. Details are not described herein again.

According to a third aspect, another computing device is provided, and may include a processor. The processor is coupled to a memory, the memory is configured to store instructions, and the processor is configured to execute the instructions in the memory, so that the computing device performs the method according to the first aspect of embodiments of this application or any possible implementation of the first aspect.

According to a fourth aspect, another computing device is provided, and includes a processor, configured to execute a computer program (or a computer-executable instruction) stored in a memory. When the computer program (or the computer-executable instruction) is executed, the method according to the first aspect and the possible implementations of the first aspect is performed.

In a possible implementation, the processor and the memory are integrated.

In another possible implementation, the memory is located outside the computing device.

The computing device further includes a communication interface, and the communication interface is used by the computing device to communicate with another device, for example, send or receive data and/or a signal. For example, the communication interface may be a transceiver, a circuit, a bus, a module, or another type of communication interface.

According to a fifth aspect, a computer-readable storage medium is provided, and includes a computer-readable instruction. When the computer-readable instruction is run on a computer, the first aspect of embodiments of this application or any possible implementation of the first aspect is implemented.

According to a sixth aspect, a computer program product is provided, and includes a computer-readable instruction. When the computer-readable instruction is run on a computer, the first aspect of embodiments of this application or any possible implementation of the first aspect is implemented.

### BRIEF DESCRIPTION OF DRAWINGS

FIG. 1 is a schematic diagram of a processing procedure of a mirror scrub mechanism;
FIG. 2 is a schematic diagram of an architecture of a computing device according to an embodiment of this application;
FIG. 3 is a schematic flowchart of a method for processing a memory fault according to an embodiment of this application;
FIG. 4 is a schematic diagram of determining a UCE of a hard failure type according to an embodiment of this application;
FIG. 5 is a schematic diagram of a GHES table according to an embodiment of this application;
FIG. 6 is a schematic diagram of a structure of a computing device according to an embodiment of this application; and
FIG. 7 is a schematic diagram of another structure of a computing device according to an embodiment of this application.

### DESCRIPTION OF EMBODIMENTS

Embodiments of this application provide a method for processing a memory fault and a related device, which are applied to the storage field. In the method for processing a memory fault, an exact location of the memory fault can be accurately located, and a memory mirroring mode does not need to be released.

Terms "first", "second", and the like in the specification, claims, and the foregoing accompanying drawings of embodiments of this application are used to distinguish between similar objects, and do not need to be used to describe a specific sequence or order. It should be understood that terms used in this way may be exchanged in a proper case. This is merely a differentiation manner used to describe objects of a same attribute in embodiments of this application. In addition, terms "include" and "have" and any of their variations are intended to cover non-exclusive inclusion, so that a process, a method, a system, a product, or a device that includes a series of units is not necessarily limited to these units, but may include other units that are not clearly listed or that are inherent to the process, the method, the product, or the device.

Embodiments of this application relate to much related knowledge about a memory mirroring mode. For better understanding of the solutions of the embodiments of this application, related terms and concepts that may be involved in the embodiments of this application are described first below.

Address space: An address space is a range of memory code (code addresses). Coding means to assign a number to each physical storage unit (one byte), and is usually referred to as "address editing". The purpose of assigning a number to a storage unit is to find the storage unit and read and write data. This is "address seeking" (therefore, the address space is also referred to as an addressing space).

Memory mirroring mode: Memory spaces of two independent physical memory devices are set to be in a mutual backup relationship. This backup relationship is referred to as mirroring. A computing device allocates exactly same address spaces to two memories that are mirrors for each other as memory spaces (for example, address spaces respectively corresponding to the two memories each are 4 G). A channel for connecting one of the memories to a memory controller is a primary channel, and a channel for connecting the other memory to the memory controller is a backup channel. A working principle is: Two copies of memory data are made during data writing, the two copies are separately written into a memory space corresponding to the primary channel and a memory space corresponding to the backup channel. During data reading, data is mainly read from the memory space corresponding to the primary channel. When an error occurs in the memory space of the primary channel, the computing device reads data from the memory space corresponding to the backup channel, to ensure that correct data stored in the memory space corresponding to the backup channel can still be obtained when the memory space corresponding to the primary channel fails, ensuring continuous and normal running of the computing device.

Mirror scrub (mirror scrub): In the memory mirroring mode, during data reading, if the memory controller cannot correct incorrect data in the memory space corresponding to the primary channel by using an error correction capability of the memory controller (that is, a UCE fault occurs in the memory space corresponding to the primary channel), the memory controller sends a data read request to the backup channel. If reading succeeds (no error is returned), the memory controller transmits the correct data to a data reading module, and then writes the correct data back into a memory of the primary channel and tries to correct the incorrect data on the primary channel. After the write-back action is completed, the memory controller reads again the data that is written back into the primary channel to check the data, and this action is referred to as mirror scrub.

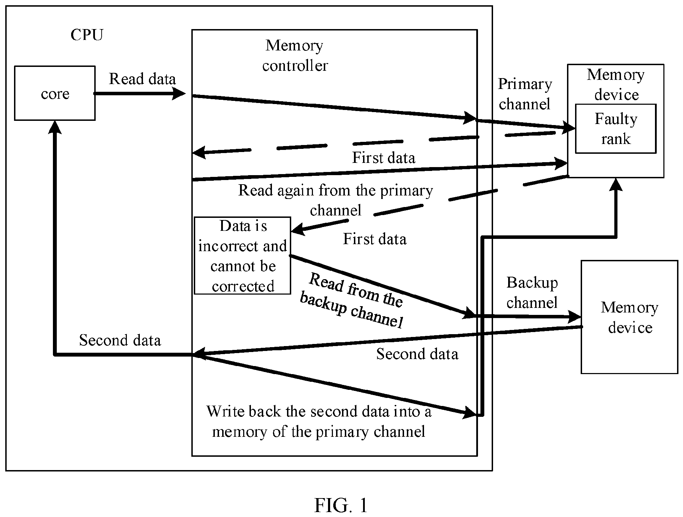

Specifically, FIG. 1 is a schematic diagram of a processing procedure of a mirror scrub mechanism. When a processor core core of a central processing unit (central processing unit, CPU) reads data, a memory controller of the CPU first reads first data from a memory device corresponding to a primary channel. When a rank (a manufacturer describes a memory set of 64 bits as one rank) that is on the memory device corresponding to the primary channel and that stores data is faulty, the obtained first data is checked as incorrect. In this case, the memory controller reads the first data from the memory device corresponding to the primary channel again, and if the memory controller still learns that the first data is incorrect and cannot be corrected, the memory controller reads correct second data from a memory device corresponding to a backup channel, returns the correct second data to the core to complete reading, and in addition, further writes the correct second data back into the memory device corresponding to the primary channel, where an address of the second data is the same as an address of the first data.

UCE of a hard failure type: After the computing device enables a memory mirroring mode, if the memory controller finds, in a running process through mirror scrub, that after the correct data is written back into the primary channel by using the backup channel, the data is still checked as a failure and cannot be corrected, it is considered that this fault is a UCE of a hard memory failure type.

Mirror failover (mirror failover): This means that a mirror relationship between memory channels configured as a mirroring mode is released. After the mirror relationship is released, the memory controller uses only a memory of the backup channel, and does not use a memory of the primary channel.

Page (Page): In an operating system (operating system, OS), a page is a continuous virtual memory block of a fixed length. The page is a minimum data unit used for memory management in the operating system, and is mapped to a continuous physical memory block of a same length as the page. A size of the page is usually determined by a processor architecture. Pages in the OS generally have a uniform size that is generally 4096 bytes.

Soft page offline (soft Page offline): This function is to copy content of a to-be-offlined page to another place (or to directly delete the content of the page if the content is not required), and the original page is deleted from a memory management system of the operating system and no longer used. This function does not kill or affect, in another manner, any application program.

System management interruption (system management interruption, SMI): The system management interruption is an interruption triggered by hardware and processed by a basic input output system (basic input output system, BIOS). The hardware may be triggered by a corresponding instruction. After triggering, a CPU enters a system management mode (system management mode, SMM) mode. In this case, an OS-related execution procedure is suspended, and an SMI interruption service program registered in the BIOS is executed.

System control interruption (system control interruption, SCI): The system control interruption is an interruption triggered by the BIOS and then processed by the OS, and is usually triggered after the BIOS processes a related SMI interruption. After the SCI interruption is triggered, an SCI interruption service program registered in a kernel of the OS processes the SCI interruption. The interruption is used for communication between the BIOS and the OS.

Before the embodiments of this application are described, a processing manner of a UCE of a hard failure type in a current memory mirroring mode is briefly described first, to help subsequently understand the embodiments of this application.

The UCE of the hard memory failure type occurs on the current computing device. In this case, the memory controller marks this fault type as a mirror failover error and triggers an SMI interruption, and the BIOS responds to the SMI interruption and executes a corresponding interruption service program to perform a mirror failover operation. After performing the mirror failover operation, the memory controller no longer accesses a memory of a primary channel when performing a read/write operation again, and only uses a memory of a backup channel.

There is a physical memory of at least one rank (a manufacturer describes a memory set of 64 bits as one rank) on one channel, and a capacity of a physical memory of one rank may reach approximately 16 GB, and this capacity increases continuously with the development of science and technologies. When there is a UCE of a hard memory failure type on a specific bit of a specific rank, after the mirror failover operation is performed to release the mirror relationship, other normal memories on the entire primary channel except a faulty memory location are unavailable. Therefore, an adverse impact range of the UCE of the hard memory failure type is expanded, memory resources are wasted, and a probability that the memory mirroring mode is released is significantly increased.

To resolve the foregoing problem, an embodiment of this application provides a method for processing a memory fault and a related device, which are applied to the storage field. After it is determined that a memory fault of a primary channel is a UCE of a hard failure type, a BIOS obtains a fault address, sets the fault address to a to-be-offlined address, and performs a soft page offline operation on the to-be-offlined address by using an OS, to accurately offline the fault address. This does not affect another memory address, and therefore, a mirror relationship does not need to be released, so that other memories on the primary channel except the fault address can still normally support read and write, thereby avoiding a case in which a normal memory on the primary channel cannot be used after the mirror relationship is released, and increasing a probability of using a memory of the primary channel.

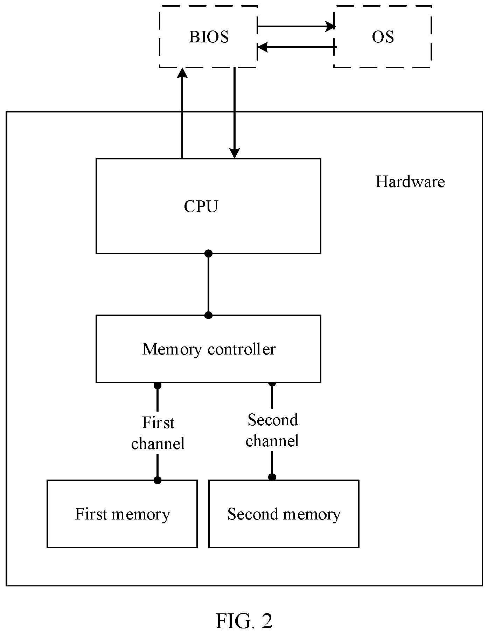

First, for example, for ease of understanding subsequent embodiments, an architecture of a computing device that uses the method for processing a memory fault provided in embodiments of this application is briefly described. For details, refer to FIG. 2. FIG. 2 is a schematic diagram of an architecture of a computing device according to an embodiment of this application. Hardware of the computing device specifically includes:
at least one CPU, a first memory, a second memory, and a memory controller, where the first memory and the second memory are connected to the memory controller, and the memory controller is connected to a processor. The memory controller may support a memory mirroring mode, and can support an error detection and error correction capability of memory data. The first memory is accessed by using a first channel, and the second memory is accessed by using a second channel. The first memory and the second memory are configured as a mirroring mode by using the memory controller, that is, the first memory and the second memory are mutual mirrored memories. In addition, a BIOS and an OS can run on the CPU. The BIOS may be stored in the CPU as software, or may be stored in a memory independent of the CPU. In addition, the OS of the CPU may also be stored in the memory as software, and the CPU may invoke the BIOS in the memory to perform initialization configuration on a hardware apparatus of the computing device, and collect state information of some composite modules in an interruption response manner in a running process, for example, related information of a fault in the first memory or the second memory, and may exchange information with the OS. In other words, the CPU may invoke the OS to perform a related operation based on related information of the BIOS.

It should be noted that FIG. 2 is merely used as an example for the embodiments of this application, and does not constitute a substantial limitation on the embodiments of this application. It may be understood that, in an actual case, the memory controller may be a chip independent of the CPU, as shown in FIG. 2, or may be integrated into the CPU, integrated into a north bridge, or integrated into a south bridge. This is not specifically limited herein.

For example, a method used by the computing device to specifically process a memory fault includes: obtaining uncorrectable error information of the first memory, where the uncorrectable error information includes a fault address; and then obtaining first target data corresponding to the fault address from the second memory, and writing the first target data into the fault address in the first memory, where the first memory and the second memory are mutual mirrored memories; checking second target data at the fault address in the first memory, where the second target data is data at the fault address in the first memory after the first target data is written into the fault address in the first memory; and if the second target data is checked as fault data, marking the fault address in the first memory as a to-be-offlined address, and performing a soft page offline operation on the to-be-offlined address.

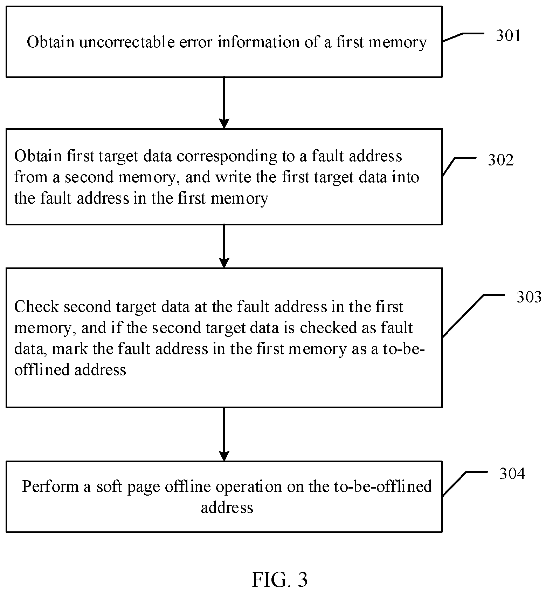

For better understanding of the embodiments of this application, a method for processing a memory fault provided in the embodiments of this application is described in detail below with reference to the accompanying drawings. A person of ordinary skill in the art may learn that, with the development of technologies and emergence of a new scenario, the technical solutions provided in the embodiments of this application are also applicable to a similar technical problem. For details, refer to FIG. 3. FIG. 3 is a schematic flowchart of a method for processing a memory fault according to an embodiment of this application. The method specifically includes :
301: Obtain uncorrectable error information of a first memory.

A computing device obtains the uncorrectable error information of the first memory, and the uncorrectable error information includes a fault address.

For example, for ease of understanding the example in FIG. 3, the computing device in FIG. 2 is used as an example for description in this embodiment of this application. When a UCE fault is sent from the first memory, a memory controller of the computing device obtains the uncorrectable error information of the first memory, and the uncorrectable error information includes the fault address. The memory controller supports actions such as a memory mirroring mode, memory data check, error type identification, fault address recording, mirror scrub data write-back, and SMI interruption triggering. For example, the memory controller reads data and a check bit of the data from the first memory, and after reading, the memory controller checks the data to obtain a newly generated check bit. If the check bit is different from the check bit read from the first memory, the memory controller determines that the read data is incorrect, and determines that an address that is in the first memory and that stores the data is a fault address.

Then, after obtaining the uncorrectable error information of the first memory, the computing device repairs the data at the fault address in the first memory. This is specifically shown in step 302.

302: Obtain first target data corresponding to the fault address from a second memory, and write the first target data into the fault address in the first memory, where the first memory and the second memory are mutual mirrored memories.

For example, a CPU of the computing device invokes a BIOS to configure, as a mirroring mode, the first memory and the second memory that are connected with the memory controller. In other words, the first memory and the second memory are mutual mirrored memories. After the mirroring mode is enabled, same data is stored at same addresses in the first memory and the second memory. The memory controller may write correct second data back into the fault address in the first memory by using a mirror scrub mechanism. Specifically, after obtaining the uncorrectable error information of the first memory, the memory controller may obtain the first target data corresponding to the fault address from the second memory, that is, the memory controller may obtain the first target data and a check bit corresponding to the first target data from an address that is in the second memory and that is the same as the fault address. If a newly generated check bit obtained by checking the first target data is the same as the obtained check bit, it is determined that the first target data is correct data, and then the first target data is written into the fault address in the first memory, to repair data at the fault address in the first memory.

303: Check second target data at the fault address in the first memory, and if the second target data is checked as fault data, mark the fault address in the first memory as a to-be-offlined address.

After writing the first target data obtained from the second memory into the fault address in the first memory, the memory controller obtains data, that is, the second target data (specifically, the second target data may be the same as the first target data or may be different from the first target data), from the fault address in the first memory again, and further obtains check code of the second target data. Then, the memory controller checks the second target data. If obtained newly generated check code is the same as the check code obtained from the first memory, it indicates that the second target data is the same as the first target data; in other words, the data at the fault address in the first memory has been recovered into correct data. If the obtained newly generated check code is different from the check code obtained from the first memory, it indicates that the second target data is different from the first target data; in other words, the second target data is fault data, and it may be considered that a UCE fault of a hard failure type occurs at the fault address in the first memory. In this case, the second target data is checked as the fault data, and the fault address in the first memory is marked as the to-be-offlined address.

**In** a possible implementation, the computing device marks the fault address in the first memory as the to-be-offlined address based on a "to-be-offlined" identification. For example, the "to-be-offlined" identification may be a character, a number, a character string, a word, a word combination, or the like. This is not specifically limited herein.

**In** this implementation of this application, the fault address in the first memory is marked as the to-be-offlined address by the "to-be-offlined" identification in a plurality of manners, and this reflects diversity and selectivity of a solution.

**In** a possible implementation, the computing device generates a generic hardware error source (generic hardware error source, GHES) table, and the GHES table includes the fault address and the corresponding "to-be-offlined" identification.

Optionally, a fault level of the fault address in the GHES table is correctable. For example, in the GHES table, the fault level of the fault address is set to corrected, and corrected indicates that the fault level is correctable (because correct first target data can still be obtained from the second memory by using a backup channel, that is, the second channel, a fault at the fault address is correctable for the computing device). This reflects that the fault at the fault address does not adversely affect running of the computing device.

**In** addition, the computing device performs a soft page offline operation on the to-be-offlined address. This is shown in the following step 304:
304: Perform a soft page offline operation on the to-be-offlined address.

Specifically, the computing device performs the soft page offline operation on the to-be-offlined address. The to-be-offlined address is deleted from a memory management system of an operating system and is no longer used, so that the fault address is soft-offlined. Therefore, a mirror relationship between the first memory and the second memory does not need to be released, and a memory space in the first memory except the to-be-offlined address is not deleted or use of the memory space in the first memory except the to-be-offlined address is not affected in another manner.

**In** a possible implementation, the computing device invokes the OS to perform the soft page offline operation on the fault address that is corresponding to the "to-be-offlined" identification and whose fault level is correctable in the GHES table. In this implementation of this application, a specific implementation of the solution is reflected, and reliability of the solution is reflected.

In an implementation of this application, the uncorrectable error information of the first memory is obtained, where the uncorrectable error information includes the fault address; and then the first target data corresponding to the fault address is obtained from the second memory, and the first target data is written into the fault address in the first memory, where the first memory and the second memory are mutual mirrored memories; the second target data at the fault address in the first memory is checked; and if the second target data is checked as fault data, the fault address in the first memory is marked as the to-be-offlined address, and the soft page offline operation is performed on the to-be-offlined address. In this way, the fault address is accurately offlined, another memory address is not affected, and further, the mirror relationship between the first memory and the second memory does not need to be released, so that another memory space in the first memory except the fault address can still normally support read and write, thereby avoiding a case in which a normal memory space in the first memory cannot be used after the mirror relationship is released, increasing a probability of using the first memory, narrowing an adverse impact range of a UCE of a hard memory failure type, avoiding a waste of memory resources, and significantly reducing a probability of releasing a memory mirroring mode.

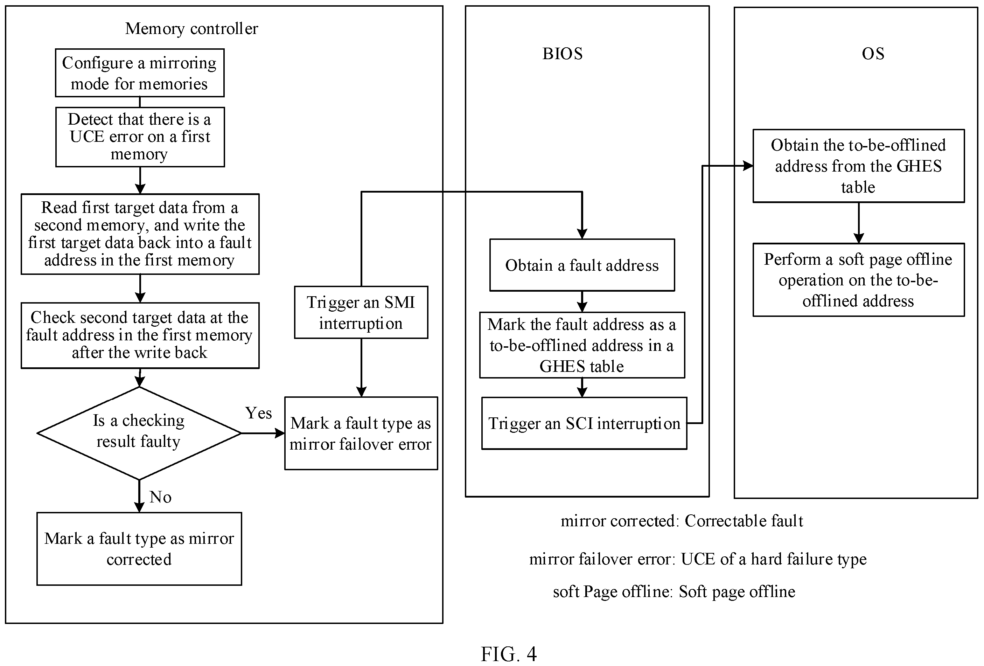

For example, for better understanding of the embodiment shown in FIG. 3, a specific application scenario of the computing device in FIG. 2 is used as an example for description. For details, refer to FIG. 4. FIG. 4 is a schematic diagram of determining a UCE of a hard failure type according to an embodiment of this application.

The computing device configures, as a mirror mode by using a BIOS, memories connected to the memory controller. For example, in FIG. 2, the first memory is set to a memory space on the first channel, and the second memory is set to a memory space on the second channel. In this case, the first channel may be used as a primary channel, and the second channel may be used as a backup channel.

When writing data for storage, the memory controller respectively writes the same data into the first memory and the second memory in the mirror mode through the first channel and the second channel, to back up memory data. When reading data in the memory, the memory controller reads data from the first memory through the first channel, and each time the memory controller reads data, the memory controller checks the read data. Specifically, when reading data, the memory controller further reads check code corresponding to the data from the first memory, and generates new check code based on the read data. If the newly generated check code is the same as the read check code, it is considered that the data is correct data, and there is no error and no fault, and the data is sent to a processor. If the newly generated check code of the obtained data is inconsistent with the read check code, it is determined that sending of the read data fails, in other words, it is detected that there is a UCE error in the first memory, and the memory controller cannot correct the fault data, and the memory controller determines that an address that is in the first memory and that stores the fault data is a fault address, and obtains uncorrectable error information that is of the first memory and that includes the fault address. In this case, the memory controller reads, through the second channel by using a mirror scrub mechanism, corresponding correct backup data, that is, the first target data, from an address that is in the second memory and that is the same as the fault address, and writes the first target data back into the fault address in the first memory. And then, the memory controller obtains, from the first channel, the second target data that is in the first memory and that is obtained after the writing back, and checks the second target data. Specific checking is similar to that above, and details are not described herein again. If the second target data is correct data after checking, the fault that has occurred before may be marked as mirror corrected, that is, the fault is identified as a correctable fault. If the second target data is still fault data after checking, the fault may be marked as a mirror failover error, that is, the fault is identified as a UCE of a hard failure type.

Optionally, the UCE of the hard failure type or the correctable fault may be identified by using another number, character, character string, Chinese character, word, word combination, combination of a number and a character, or the like. In an actual case, an identification in another form may alternatively be used. This is not specifically limited herein.

In addition, the memory controller triggers an SMI interruption, and the CPU executes an SMI interruption service program in the BIOS. For example, as shown in FIG. 4, after triggering the SMI interruption, the memory controller enters an SMM mode. In this case, the CPU executes the SMI interruption service program in the BIOS to obtain a fault address whose fault mark is mirror failover error, and sets the fault address to a to-be-offlined address.

In a possible implementation, the CPU sets a corresponding identification for the fault address by using the BIOS, and the identification is used to indicate that the fault address needs to be offlined, to indicate that the fault address is a to-be-offlined address.

Optionally, the CPU generates a GHES table by using the BIOS, and the GHES table may include the fault address and the identification indicating that the fault address is to be offlined. For example, in FIG. 4, a corresponding GHES table is generated for the fault address by using the SMI interruption service program, and a fault level of the fault address is set to corrected in the GHES table, where corrected indicates that the fault level is correctable (because correct first target data can still be obtained from the second memory through the backup channel, that is, the second channel, a fault at the fault address is correctable for the computing device), and a corresponding identification (flag) is marked as error threshold exceeded, where error threshold exceeded is used as an identification to indicate that the fault address is in a to-be-offlined state.

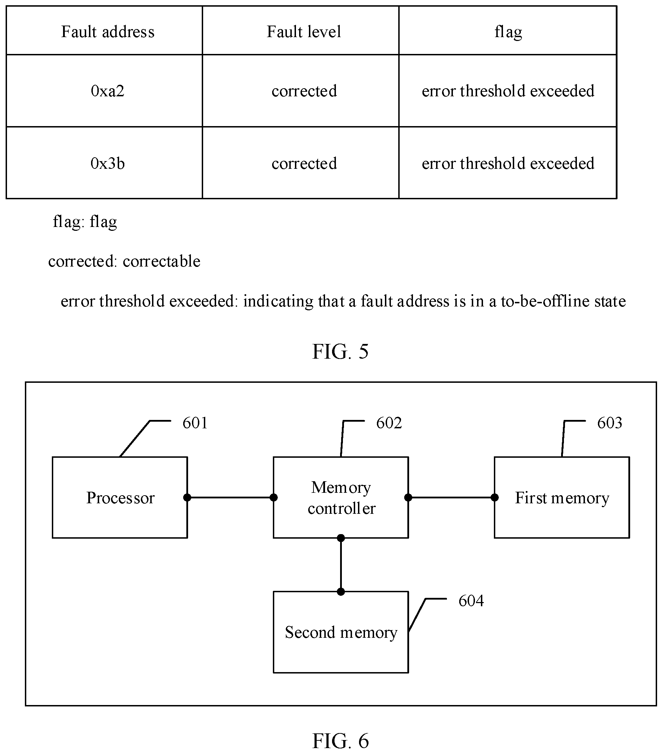

For details, refer to FIG. 5. FIG. 5 is a schematic diagram of a GHES table according to an embodiment of this application. Fault addresses include addresses 0xa2 and 0x3b, fault levels are both corrected, and corresponding identifications, that is, flags, are both error threshold exceeded. This indicates that both the addresses 0xa2 and 0x3b are to-be-offlined addresses. Optionally, the identification may alternatively be soft Page offline, indicating that a soft page offline operation needs to be performed on a fault address, that is, identifying the fault address as a to-be-offlined address; or another number, character, character string, Chinese character, word, word combination, combination of a number and a character, or the like may alternatively be used to identify the fault address as a to-be-offlined state. In an actual case, an identification in another form may alternatively be used. This is not specifically limited herein.

In this implementation of this application, the fault address is set to the to-be-offlined address by generating the GHES table, so that it is convenient for the OS to subsequently obtain the to-be-offlined address, data transmission between the BIOS and the OS is reduced, and working efficiency is improved.

In addition, it may be understood that another implementation is used to set a corresponding identification for the fault address and identify the fault address as the to-be-offlined address. For example, a register is defined to indicate a state of an incorrect address. One bit location 1 in the register indicates that the fault address is the to-be-offlined address, or a corresponding identification is set in another table to indicate that the fault address is the to-be-offlined address. In an actual case, another manner may alternatively be used for implementation. This is not specifically limited herein.

Then, the SMI interruption service program in the BIOS is run to report an SCI interruption to the OS, to trigger the CPU to execute a related SCI interruption service program in the OS to obtain the to-be-offlined address, and a soft page offline operation is performed on the to-be-offlined address. For example, in FIG. 4, after the GHES table is generated, the SCI interruption is triggered, and then the CPU runs the SCI interruption service program in the OS to obtain, from the GHES table, a fault address whose identification is error threshold exceeded, that is, the to-be-offlined address, and then performs the soft page offline operation, so that the fault address is soft-offlined, and the fault address does not support memory read and write any longer.

Alternatively, in a possible implementation, the CPU runs the BIOS to send a message that carries the to-be-offlined address to the OS, so that the OS obtains the to-be-offlined address from the message that carries the to-be-offlined address, and performs the soft page offline operation on the to-be-offlined address. Optionally, the message may carry the to-be-offlined address and the corresponding identification. This is not specifically limited herein. In this implementation of this application, the to-be-offlined address is obtained by using the message that is sent by the BIOS and that carries the to-be-offlined address, so that implementations and application scenarios are increased, and flexibility of the solution is improved.

In this embodiment of this application, a fault address of a UCE of a hard failure type is set, by using the BIOS, to a to-be-offlined address on which the soft offline operation needs to be performed. And then the fault address is accurately offlined by using the soft page offline operation of the OS, to entirely eliminate impact of the fault. In addition, a mirror failover operation does not need to be performed to release a memory mirroring mode, and another memory address is not affected, and therefore, the mirror relationship between the first memory and the second memory does not need to be released. So that another memory space in the first memory except the fault address can still normally support read and write, thereby avoiding a case in which a normal memory space in the first memory cannot be used after the mirror relationship is released, increasing a probability of using the first memory, narrowing an adverse impact range of the UCE of the memory hard failure type, avoiding a waste of memory resources, and significantly reducing a probability of releasing the memory mirroring mode.

It should be noted that FIG. 4 is merely used as an example for understanding the embodiments of this application, and does not constitute a substantial limitation on this solution. It may be understood that this solution may alternatively be implemented in another manner. This is not specifically limited herein.

A method for detecting a memory fault provided in the embodiments of this application is described in detail above. In this specification, a specific example is used to describe a principle and an implementation of the embodiments of this application. The foregoing descriptions of the embodiments are merely used to help understand the method for detecting a memory fault in the embodiments of this application and a core idea of the method. In addition, a person of ordinary skill in the art may change a specific implementation and an application scope according to the idea of the embodiments of this application. In conclusion, content of this specification should not be construed as a limitation on the embodiments of this application.

As shown in FIG. 6, an embodiment of this application further provides a computing device, and the computing device is applied to the storage field. For details, refer to FIG. 6. FIG. 6 is a schematic diagram of a structure of a computing device according to an embodiment of this application. In a possible implementation, the computing device may include corresponding modules or units that perform the methods/operations/steps/actions in FIG. 3 in the foregoing method embodiments. The unit may be a hardware circuit or software, or may be implemented by a combination of a hardware circuit and software. In a possible implementation, the computing device may include a processor 601, a memory controller 602, a first memory 603, and a second memory 604. The first memory 603 and the second memory 604 are connected to the memory controller 602, the memory controller 602 is connected to the processor 601, and the first memory 603 and the second memory 604 are mutual mirrored memories. The memory controller 602 may be configured to perform the following steps in the foregoing method embodiments: obtaining uncorrectable error information of the first memory 603, where the uncorrectable error information includes a fault address; obtaining first target data corresponding to the fault address from the second memory 604; writing the first target data into the fault address in the first memory 603; and checking second target data at the fault address in the first memory 603. The processor 601 may be configured to perform the following step in the foregoing method embodiments: if the second target data is fault data, marking the fault address in the first memory 603 as a to-be-offlined address, and performing a soft page offline operation on the to-be-offlined address.

In another possible design, the processor 601 and the memory controller 602 may perform, in a one-to-one correspondence, the methods/operations/steps/actions in various possible implementations of an energy storage device in the foregoing method embodiments.

In a possible design, the processor 601 is specifically configured to mark the fault address in the first memory 603 as the to-be-offlined address based on a "to-be-offlined" identification.

In a possible design, the processor 601 is specifically configured to perform the soft page offline operation on the to-be-offlined address by using an OS.

In a possible design, the processor 601 is specifically configured to generate a GHES table, and the GHES table includes the fault address and the corresponding "to-be-offlined" identification.

In a possible design, a fault level of the fault address in the GHES table is correctable.

In a possible design, the processor 601 is specifically configured to perform, by using the OS, the soft page offline operation on the fault address that is corresponding to the "to-be-offlined" identification and whose fault level is correctable in the GHES table.

For beneficial effects of the computing device in the foregoing designs in the embodiments of this application, refer to beneficial effects of corresponding implementations in the method embodiments in FIG. 3 and FIG. 4. Details are not described herein again.

It should be noted that content such as information exchange and execution processes between modules/units in the computing device in the embodiment corresponding to FIG. 6 is based on a same concept as the method embodiment corresponding to FIG. 3 in the embodiments of this application. For specific content, refer to the foregoing descriptions in the method embodiments of this application. Details are not described herein again.

In addition, functional modules or units in the embodiments of this application may be integrated into one processor, and the integrated modules or units may be implemented in a form of hardware or in a form of a software function module.

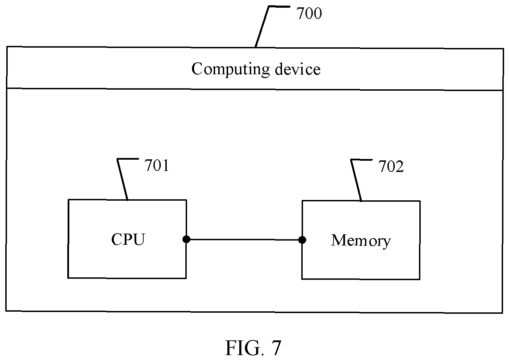

A computing device provided in an embodiment of this application is described next. FIG. 7 is a schematic diagram of another structure of a computing device according to an embodiment of this application. The computing device may be, for example, an electronic device such as a server or a computer. Specifically, a computing device 700 includes a CPU 701 and at least one memory 702, and the memory 702 may be transient storage or persistent storage. A program stored in the memory 702 may include one or more modules (not shown in the figure), for example, an application program of a BIOS and/or an OS is stored in the memory 702, and each module may include a series of instruction operations on the computing device 700. Further, the CPU 701 may be configured to communicate with the memory 702 and perform a series of instruction operations in the memory 702 on the computing device 700.

In this embodiment of this application, the CPU 701 is configured to perform the method in the embodiment corresponding to FIG. 3. For example, the CPU 701 may be configured to: obtain uncorrectable error information of a first memory, where the uncorrectable error information includes a fault address; and then, obtain first target data corresponding to the fault address from a second memory, and write the first target data into the fault address in the first memory, where the first memory and the second memory are mutual mirrored memories; check second target data at the fault address in the first memory, where the second target data is data at the fault address in the first memory after the first target data is written into the fault address in the first memory; and if the second target data is checked as fault data, mark the fault address in the first memory as a to-be-offlined address, and perform a soft page offline operation on the to-be-offlined address. In this way, the fault address is accurately offlined to entirely eliminate impact of the fault, and a mirror failover operation does not need to be performed to release a mirroring mode of the first memory and the second memory, so that another memory space in the first memory except the fault address can still normally support read and write, thereby avoiding a case in which a normal memory space in the first memory cannot be used after a mirror relationship is released, increasing a probability of using the first memory, narrowing an adverse impact range of a UCE of a hard memory failure type, avoiding a waste of memory resources, and significantly reducing a probability of releasing a memory mirroring mode.

An embodiment of this application further provides a computer-readable storage medium, including a computer-readable instruction. When the computer-readable instruction is run on a computer, the computer is enabled to perform any implementation shown in the foregoing method embodiments.

An embodiment of this application further provides a computer program product. The computer program product includes a computer program or an instruction. When the computer program or the instruction is run on a computer, the computer is enabled to perform any implementation shown in the foregoing method embodiments.

An embodiment of this application further provides a chip or a chip system, and the chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in performing wired and/or wireless communication. The memory (or the storage module) may be configured to store a program or a group of instructions. The processor may invoke the program or the group of instructions to implement an operation performed by a terminal or a network device in the method embodiments or any possible implementation of the method embodiments. The chip system may include the foregoing chip, or may include the foregoing chip and another separate device such as the memory (or the storage module) and/or the transceiver (or the communication module).

In addition, it should be noted that the described apparatus embodiment is merely an example. Units described as separate parts may or may not be physically separate, and parts displayed as units may or may not be physical units, may be located in one place, or may be distributed on a plurality of units. Some or all of the modules may be selected based on an actual requirement to implement the objectives of the solutions in the embodiments. In addition, in the accompanying drawings of the apparatus embodiment provided in this application, a connection relationship between modules indicates that there is a communication connection between the modules, and this may be specifically implemented as one or more communication buses or signal lines.

According to the descriptions of the foregoing implementations, a person skilled in the art may clearly understand that this application may be implemented by using software plus indispensable universal hardware, and certainly may also be implemented by using dedicated hardware including a dedicated integrated circuit, a dedicated CPU, a dedicated memory, a dedicated component, and the like. Generally, any function completed by a computer program may be easily implemented by using corresponding hardware. In addition, diverse specific hardware structures may also be used to implement a same function, for example, an analog circuit, a digital circuit, or a dedicated circuit. However, in most cases, software program implementation is a better implementation for the embodiments of this application. Based on such an understanding, the technical solutions of the embodiments of this application essentially or the part contributing to the conventional technology may be embodied in a form of a software product. The computer software product is stored in a readable storage medium, such as a floppy disk, a USB flash drive, a removable hard disk, a read only memory (read only memory, ROM), a random access memory (random access memory, RAM), a magnetic disk, or an optical disc of a computer, and includes several instructions for instructing a computer device (which may be a personal computer, a training device, a network device, or the like) to perform the methods in the embodiments of this application.

## Claims

1. A method for processing a memory fault, comprising:
obtaining uncorrectable error information of a first memory, wherein the uncorrectable error information comprises a fault address;
obtaining first target data corresponding to the fault address from a second memory, and writing the first target data into the fault address in the first memory, wherein the first memory and the second memory are mutual mirrored memories;
checking second target data at the fault address in the first memory, and if the second target data is checked as fault data, marking the fault address in the first memory as a to-be-offlined address; and
performing a soft page offline operation on the to-be-offlined address.

2. The method according to claim 1, wherein the marking the fault address in the first memory as a to-be-offlined address comprises:
marking the fault address in the first memory as the to-be-offlined address based on a "to-be-offlined" identification.

3. The method according to claim 1 or 2, wherein the performing a soft page offline operation on the to-be-offlined address comprises:
performing the soft page offline operation on the to-be-offlined address by using an operating system OS.

4. The method according to claim 3, wherein the marking the fault address in the first memory as the to-be-offlined address based on a "to-be-offlined" identification comprises:
generating a generic hardware error source GHES table, wherein the GHES table comprises the fault address and the corresponding "to-be-offlined" identification.

5. The method according to claim 4, wherein a fault level of the fault address in the GHES table is correctable.

6. The method according to claim 5, wherein the performing a soft page offline operation on the to-be-offlined address comprises:
performing, by using the OS, the soft page offline operation on the fault address that is corresponding to the "to-be-offlined" identification and whose fault level is correctable in the GHES table.

7. A computing device, wherein the computing device comprises a processor, a first memory, a second memory, and a memory controller, the first memory and the second memory are connected to the memory controller, the memory controller is connected to the processor, and the first memory and the second memory are mutual mirrored memories;
the memory controller is configured to obtain uncorrectable error information of the first memory, wherein the uncorrectable error information comprises a fault address;
the memory controller is further configured to: obtain first target data corresponding to the fault address from the second memory, and write the first target data into the fault address in the first memory;
the memory controller is further configured to check second target data at the fault address in the first memory;
the processor is configured to mark the fault address in the first memory as a to-be-offlined address if the second target data is checked as fault data; and
the processor is further configured to perform a soft page offline operation on the to-be-offlined address.

8. The computing device according to claim 7, wherein the processor is specifically configured to mark the fault address in the first memory as the to-be-offlined address based on a "to-be-offlined" identification.

9. The computing device according to claim 8, wherein the processor is specifically configured to generate a generic hardware error source GHES table, and the GHES table comprises the fault address and the corresponding "to-be-offlined" identification.

10. The computing device according to claim 9, wherein the processor is specifically configured to perform, by using the OS, the soft page offline operation on the fault address that is corresponding to the "to-be-offlined" identification and whose fault level is correctable in the GHES table.
